# EUROPEAN PATENT APPLICATION

(11) **EP 4 449 892 A1**
(43) Date of publication of application: **23.10.2024**
(21) Application number: 22907444.8
(22) Date of filing: 13.12.2022
(51) Int. Cl.: A24B 15/10, A24B 15/24, A24B 13/00

(54) **TOBACCO MATERIAL, PRODUCTION METHOD THEREFOR, AND TOBACCO PRODUCT**

(30) Priority: 14.12.2021 JP 2021202811
(71) Applicant: Japan Tobacco Inc., Tokyo 105-6927 (JP)
(72) Inventor: NANASAKI, Yusuke, Tokyo 130-8603 (JP); MIZUTANI, Masashi, Tokyo 130-8603 (JP); NAGAI, Atsushi, Tokyo 130-8603 (JP); CHIDA, Masahiro, Tokyo 130-8603 (JP)
(74) Representative: Hoffmann Eitle
(86) International application number: PCT/JP2022/045881
(87) International publication number: WO 2023/112920

(57) **Abstract**

The present invention addresses the problem of providing a tobacco material in which there is limited occurrence of pieces of the tobacco material sticking together. The present invention solves this problem by means of a tobacco material in which the total protein content per 100 mg of the material, in terms of dry weight, is no higher than 5 mg.

## Description

### Technical Field

The present invention relates to a tobacco material, a production method therefor, and a tobacco product.

### Background Art

Various types of tobacco materials are used in tobacco products, such as cigarettes (paper rolled tobacco), non-combustion-heating-type tobacco, electronic cigarettes, or smokeless tobacco. Tobacco materials are required to have various functions in addition to the main function of releasing desired components contained in tobacco leaves used as a raw material, and tobacco materials having desired functions and methods for producing such tobacco materials have been developed.

For example, Patent Document 1 discloses a method for producing a tobacco material, wherein the method includes a step of heating raw material tobacco leaves, which have a water content in a particular range, in a particular temperature range to increase the bulkiness of tobacco leaves and change the flavor.

Patent Document 2 discloses a tobacco material that can evenly impart an inhaling flavor, wherein the tobacco material contains leaf tobacco particles having an average particle size in a particular range and a dispersion medium for dispersing the particles.

Patent Document 3 discloses a method for producing a reconstituted tobacco sheet having high mechanical strength and containing a sufficient amount of aerosol generating agent, wherein the reconstituted tobacco sheet is a sheet-shaped tobacco material, and the method includes subjecting a tobacco raw material to extraction with water to separate a water-based tobacco extract and a water-insoluble tobacco residue, then blending pulp with the water-insoluble tobacco residue to make a base sheet, and then adding the water-based tobacco extract to the base sheet.

### Citation List

### Patent Document

Patent Document 1: Japanese Unexamined Patent Application Publication No. 2018-108087
Patent Document 2: Japanese Unexamined Patent Application Publication No. 2017-153492
Patent Document 3: International Publication No. WO 2020/148902

### Summary of Invention

### Technical Problem

Tobacco materials are required to have various functions, and one of the functions is to prevent or reduce sticking between pieces of tobacco materials. Sticking between pieces of a tobacco material reduces the total surface area of the tobacco material to decrease the amount of desired components released from the surface of the tobacco material, also increases the effort and cost for storing the tobacco material, and furthermore causes difficulty in ensuring the flow path of gas and liquid around pieces of the tobacco material, and other problems. It is thus advantageous for users to prevent or reduce sticking between pieces of the tobacco material. However, there is almost no study to achieve this, and there has been still room for improvement.

The present invention is directed to a tobacco material where pieces of the tobacco material are less likely to stick to each other.

### Solution to Problem

As a result of intensive studies, the inventors of the present invention have found that the proteins contained in a tobacco material cause sticking, and the above problems can be solved by controlling the amounts of these components at particular values or less, completing the present invention.

Specifically, the present invention is as described below.
[1] A tobacco material having a total protein content of 5 mg or less per 100 mg dry weight.
[2] The tobacco material according to [1], wherein the tobacco material has a total protein content of 3 mg or less per 100 mg dry weight.
[3] The tobacco material according to [2], wherein the tobacco material has a total protein content of less than 2 mg per 100 mg dry weight.
[4] The tobacco material according to any one of [1] to[3], wherein the tobacco material has a total starch content of less than 1.8 mg per 100 mg dry weight.
[5] The tobacco material according to any one of [1] to[4], wherein the tobacco material has a total protein and starch content of 7 mg or less per 100 mg dry weight.
[6] A tobacco material having a total protein content of 5 wt% or less on a dry weight basis.
[7] The tobacco material according to [6], wherein the tobacco material has a total starch content of less than 1.8 wt% on a dry weight basis.
[8] The tobacco material according to [6] or[7], wherein the tobacco material has a total protein and starch content of 7 wt% or less in terms of dry weight.
[9] The tobacco material according to any one of [6] to[8], wherein the tobacco material has a total protein content of 3 wt% or less on a dry weight basis.
[10] The tobacco material according to any one of [1] to[9], wherein the tobacco material contains 20 wt% or more of components having molecular weights of 10,000 or less.
[11] The tobacco material according to [10], wherein the tobacco material contains 30 wt% or more of the components having molecular weights of 10,000 or less.
[12] The tobacco material according to [11], wherein the tobacco material contains 40 wt% or more of the components having molecular weights of 10,000 or less.
[13] The tobacco material according to any one of [1] to[12], wherein the tobacco material has a raw material tobacco content of 6 mg or more per 100 mg dry weight.
[14] The tobacco material according to any one of [1] to[13], wherein an extract obtained by extraction from the tobacco material using water as a solvent under conditions of a heating temperature of 80°C and a heating time of 30 minutes has a turbidity of 80 NTU or less.
[15] A tobacco product including the tobacco material according to any one of [1] to[14].
[16] The tobacco product according to [15], wherein the tobacco product is a cigarette, non-combustion-heating-type tobacco, an electronic cigarette, or smokeless tobacco.
[17] A tobacco material production method including:
   an extraction step of performing extraction from raw material tobacco;
   a filtration step of obtaining a filtrate by filtering an extract obtained in the extraction step; and
   a processing step of bringing the filtrate into contact with a residue obtained in the extraction step and then forming the residue into a formed body, or forming a residue obtained in the extraction step into a formed body and then bringing the filtrate into contact with the formed body,
   wherein a filtration membrane in the filtration step has an average pore size of 10,000 Da or less. Advantageous Effects of Invention

The present invention can provide a tobacco material where pieces of the tobacco material are less likely to stick to each other.

### Description of Embodiments

Embodiments of the present invention will be described below in detail, but this description illustrates examples (representative examples) of the embodiments of the present invention. The present invention is not limited to these contents unless the present invention departs from the gist thereof.

In this description, a numerical range expressed by using "to" means a range including the numerical values before and after "to" as the minimum value and the maximum value. "A to B" means A or more and B or less.

### <Configuration of Tobacco Material>

A tobacco material according to an embodiment of the present invention (hereinafter also referred to simply as a "tobacco material") has a total protein content of 5 mg or less per 100 mg dry weight.

Tobacco leaves used as a raw material for the tobacco material contain proteins, and these components cause sticking, as being found by the inventors of the present invention. The tobacco material described above can solve problems that may be caused by sticking between pieces of tobacco materials, such as a decrease in the total surface area of a tobacco material to reduce the amount of desired components released from the surface of the tobacco material, increases in effort and cost for storing a tobacco material, and difficulty in ensuring the flow path of gas and liquid around pieces of a tobacco material, or other problems.

Unless otherwise specified, the "dry weight" in this description is not limited as long as the dry weight refers to a weight measured when a target to be weighed is dry. For example, the dry weight may be a weight after an evaluation target is held at 80 to 120°C for 1 to 5 hours.

The tobacco material may have any form. For example, the tobacco material may consist of tobacco leave-derived materials (hereinafter also referred to as raw material tobacco), such as mesophyll (lamina), leaf veins (stem), roots, or other parts of tobacco leaves, or may be composed of a combination of the raw material tobacco and other components. The tobacco material may be, for example, a processed product, such as shredded tobacco, a tobacco sheet, or tobacco granules, but preferably a tobacco sheet in order to sufficiently ensure the effect of preventing or reducing sticking between pieces of the tobacco material.

To sufficiently ensure the effect of preventing or reducing sticking between pieces of the tobacco material, the total protein content per 100 mg dry weight in the tobacco material is typically, but not necessarily, 5 mg or less, preferably 4 mg or less, more preferably 3 mg or less, still more preferably 2 mg or less. There is no need to set the lower limit of the content because the total protein is preferably as less as possible to obtain the effect of preventing or reducing sticking between pieces of the tobacco material. The total protein content may be 0 mg (below detection limit), or may be, for example, 0.02 mg or more because proteins may be contained as long as the advantageous effect of the present invention is obtained. The raw material tobacco contained as a raw material for the tobacco material normally contains RuBisCo (ribulose-1,5-bisphosphate carboxylase) as a main protein.

The total protein content per 100 mg dry weight can be evaluated by using TaKaRa BCA Protein Assay Kit. A bicinchoninic acid (BCA) reagent used in this Kit is a reagent for highly sensitive colorimetric quantification for protein solutions and also enables protein quantification for protein solutions solubilized by surfactants.

The principle of protein quantification using the BCA is based on a two-step reaction. In the first step, the peptide bonds in a protein solution reduce divalent copper ions (Cu²⁺) in the kit to monovalent copper ions (Cu⁺). The amount of Cu²⁺ to be reduced is proportional to the amount of proteins contained in the solution. In the second step, two molecules of BCA coordinate to Cu⁺ to form a blue-violet complex that exhibits strong absorption at 562 nm. This complex is measured by using a spectrophotometer in colorimetric quantification.

A portion to be measured may be collected from the tobacco material by any method, and 100 mg of the tobacco material to be measured is collected evenly at multiple positions of the entire tobacco material, and the average value of the total protein in the collected samples is evaluated. The number of collected samples is 10 or more.

The amount of starch, which is a component other than proteins, is also preferably low in order to further obtain the effect of preventing or reducing sticking between pieces of the tobacco material.

To sufficiently ensure the effect of preventing or reducing sticking between pieces of the tobacco material, the total starch content per 100 mg dry weight in the tobacco material is typically, but not necessarily, less than 1.8 mg, preferably 1.5 mg or less, more preferably 1.2 mg or less, still more preferably 1.0 mg or less. There is no need to set the lower limit of the content because the total starch is preferably as less as possible to obtain the effect of preventing or reducing sticking between pieces of the tobacco material. The total starch content may be 0 mg (below detection limit), or may be, for example, 0.5 mg or more because starch may be contained as long as the advantageous effect of the present invention is obtained. In this description, the "total starch" is also referred to simply as "starch."

The total starch content per 100 mg dry weight can be evaluated by using F-kit Starch available from J.K. International Inc. Starch (protein) decomposes at pH 4.6 in the presence of enzyme amyloglucosidase (AGS) to generate D-glucose. The generated D-glucose is quantified by using hexokinase (HK) and glucose-6-phosphate dehydrogenase (G6P-DH) at pH 7.6. D-Glucose is phosphorylated by adenosine triphosphate (ATP) in the presence of hexokinase (HK) to form starch 6-phosphate (G-6-P) with generation of adenosine diphosphate (ADP), and G-6-P is oxidized by nicotinamide adenine dinucleotide phosphate (NADP) in the presence of enzyme glucose-6-phosphate dehydrogenase (G6P-DH) to generate 6-phospho-D-gluconate and reduced nicotinamide adenine dinucleotide phosphate (NADPH). The amount of NADPH generated in this reaction is stoichiometrically equal to the amount of D-glucose generated in hydrolysis of starch, and an increase in NADPH can be evaluated at an absorbance of 334 nm, 340 nm, or 365 nm.

A portion to be measured may be collected from the tobacco material by any method, and 100 mg of the tobacco material to be measured is collected evenly at multiple positions of the entire tobacco material, and the average value of the total starch content in the collected samples is evaluated. The number of collected samples is 10 or more.

To sufficiently ensure the effect of preventing or reducing sticking between pieces of the tobacco material, the total protein and starch content per 100 mg dry weight in the tobacco material is typically, but not necessarily, 7 mg or less, preferably 5 mg or less, more preferably 1 mg or less, still more preferably 0.5 mg or less, yet still more preferably 0.2 mg or less. There is no need to set the lower limit of the total content because the proteins and the starch are preferably as less as possible to obtain the effect of preventing or reducing sticking between pieces of the tobacco material. The total protein and starch content may be 0 mg (below detection limit), or may be, for example, 0.1 mg or more because the proteins and the starch may be contained as long as the advantageous effect of the present invention is obtained.

To sufficiently ensure the effect of preventing or reducing sticking between pieces of the tobacco material, the total protein content in the tobacco material is typically, but not necessarily, 5 wt% or less, preferably 4 wt% or less, more preferably 3 wt% or less, still more preferably 2 wt% or less, on a dry weight basis. There is no need to set the lower limit of the content because the total protein is preferably as less as possible to obtain the effect of preventing or reducing sticking between pieces of the tobacco material. The total protein content may be 0 wt% (below detection limit), or may be, for example, 0.02 wt% or more because proteins may be contained as long as the advantageous effect of the present invention is obtained.

To sufficiently ensure the effect of preventing or reducing sticking between pieces of the tobacco material, the total starch content in the tobacco material is typically, but not necessarily, less than 1.8 wt%, preferably 1.5 wt% or less, more preferably 1.2 wt% or less, still more preferably 1.0 wt% or less, on a dry weight basis. There is no need to set the lower limit of the content because the total starch is preferably as less as possible to obtain the effect of preventing or reducing sticking between pieces of the tobacco material. The total protein content may be 0 wt% (below detection limit), or may be, for example, 0.5 wt% or more because proteins may be contained as long as the advantageous effect of the present invention is obtained.

To sufficiently ensure the effect of preventing or reducing sticking between pieces of the tobacco material, the total protein and starch content in the tobacco material is typically, but not necessarily, 7 wt% or less, preferably 5 wt% or less, more preferably 1 wt% or less, still more preferably 0.5 wt% or less, yet still more preferably 0.2 wt% or less on a dry weight basis. There is no need to set the lower limit of the total content because the proteins and the starch are preferably as less as possible to obtain the effect of preventing or reducing sticking between pieces of the tobacco material. The total content may be 0 wt% (below detection limit), or may be, for example, 0.1 wt% or more because the proteins and the starch may be contained as long as the advantageous effect of the present invention is obtained.

The amount (mg) of each component per 100 mg dry weight in the tobacco material is evaluated as follows: 100 mg of the tobacco material to be measured is collected evenly at multiple positions of the entire tobacco material, and the average value of the total protein and starch content in the collected samples is evaluated. The number of collected samples is 10 or more. The amount (wt%) of each component in the tobacco material can be evaluated as described above.

The total protein content and the total starch content for evaluating the total protein content or the total starch content (wt%) in the tobacco material can be evaluated by the same method as the method for evaluating the amount (mg) of each component as described above.

Examples of methods for reducing the total protein content and the total starch content in the tobacco material include, but are not limited to, extraction of proteins and starch from raw material tobacco. However, extraction of proteins and starch also causes extraction of important components, such as nicotine, together with proteins and starch. In general, a purified extract containing desired components is obtained by filtering an extract, and the purified extract is then added back to the residue obtained by extraction. It is noted that a common filtration process does not remove very small components, such as proteins and starch.

To reduce the total protein content and the total starch content to the range of each content described above by the filtration process, it is thus necessary to perform filtration using a filtration membrane having a very small average pore size. Specific conditions of the filtration membrane and the conditions of extraction and filtration will be described in the section of the tobacco material production method described below.

As described in the following Examples, most of flavor components in the tobacco material remain in the tobacco material even in filtration using a filtration membrane having an average pore size of 10,000 Da, as being confirmed by the inventors of the present invention.

The tobacco material mainly contains raw material tobacco. The raw material tobacco is, for example, mesophyll (lamina), leaf veins (stem), or roots of tobacco leaves. The amount of raw material tobacco per 100 mg dry weight in the tobacco material is typically, but not necessarily, 6 mg or more, preferably 50 mg or more, more preferably 60 mg or more, still more preferably 70 mg or more. The amount of raw material tobacco per 100 mg dry weight in the tobacco material is typically 95 mg or less, preferably 90 mg or less.

The amount of raw material tobacco can be calculated from the amount of supplied raw material tobacco.

The tobacco material may consist of tobacco leave-derived materials, but may contain components other than tobacco leave-derived materials depending on the applications. When the tobacco material is a processed product, the tobacco material may contain a binder and other components.

When the tobacco material is a processed product, the binder may be, for example, carboxymethyl cellulose, hydroxypropyl cellulose, guar gum, or xanthan gum.

The binder content in the tobacco material is typically, but not necessarily, 0.1 wt% or more, preferably 1.0 wt% or more, more preferably 10 wt% or more, and typically 80 wt% or less, preferably 60 wt% or less, more preferably 45 wt% or less.

When the tobacco material is used in tobacco products, such as cigarettes, non-combustion-heating-type tobacco, and electronic cigarettes, the tobacco material can be used in the form of, for example, shredded tobacco, a tobacco sheet, or tobacco granules described below. The conditions of each form of the tobacco material described below can apply to other forms in an applicable range.

### [Shredded Tobacco]

First, shredded tobacco will be described. The material of shredded tobacco is not limited and may be a known material, such as mesophyll (lamina), leaf veins (stem), or roots. Shredded tobacco may be made by grinding dry tobacco leaves into ground tobacco having an average particle size of 20 µm or more and 200 µm or less, homogenizing and processing ground tobacco into a sheet (hereinafter also referred to simply as a homogenized sheet), and shredding the sheet. Shredded tobacco may be of a so-called strand type, which is made by shredding a homogenized sheet, which has a length similar to the length of a tobacco material-introduced member (hereinafter also referred to as a "tobacco rod or other members" in this section), such as a tobacco rod or other members, in a direction substantially parallel to the longitudinal direction of the tobacco rod or other members, and the shredded homogenized sheet may fill in the tobacco rod or other members.

The shredded tobacco preferably has a width of 0.5 mm or more and 2.0 mm or less to fill in the tobacco rod or other members.

Various tobacco species can be used as tobacco leaves to produce the shredded tobacco and the homogenized sheet. Examples of tobacco species include flue-cured tobacco, Burley tobacco, oriental tobacco, local tobacco, and other tobacco species Nicotiana tabacum and Nicotiana rustica, and mixtures thereof. The tobacco species described above can be appropriately blended to obtain an intended flavor and used as a mixture. The details of the tobacco species are disclosed in "Encyclopedia of Tobacco, Tobacco Research Center, Japan, 2009. 3. 31." There are various conventional methods for producing the homogenized sheet, namely, conventional methods for grinding tobacco leaves and processing ground tobacco leaves into the homogenized sheet. A first method involves preparing a papermaking sheet by using a papermaking process. A second method involves mixing a suitable solvent, such as water, with ground tobacco leaves, homogenizing the resulting mixture, then thinly casting the homogenized mixture on a metal plate or metal plate belt, and drying the mixture to prepare a cast sheet. A third method involves mixing a suitable solvent, such as water, with ground tobacco leaves, homogenizing the resulting mixture, and extruding the homogenized mixture into a sheet shape to prepare a rolled sheet. The details of the types of homogenized sheets described above are disclosed in "Encyclopedia of Tobacco, Tobacco Research Center, Japan, 2009. 3. 31."

The moisture content of the tobacco material relative to the total weight of the tobacco material is, for example, 10 wt% or more and 15 wt% or less, preferably 11 wt% or more and 13 wt% or less. With such a moisture content, generation of wrapping stains can be prevented or reduced to improve machinability during production of the tobacco rod or other members into which the tobacco material is introduced.

The shredded tobacco contained in a first tobacco material may have any size and may be prepared by any method. For example, the shredded tobacco may be prepared by shredding dry tobacco leaves into a width of 0.5 mm or more and 2.0 mm or less.

In the case of a ground material made by grinding a homogenized sheet, the ground material may be prepared by grinding dry tobacco leaves into an average particle size of about 20 µm to 200 µm, homogenizing and processing the ground tobacco leaves into a sheet, and shredding the sheet into a width of 0.5 mm or more and 2.0 mm or less.

The shredded tobacco may contain an aerosol-source material that generates aerosol smoke. The type of aerosol-source material is not limited and can be selected from substances extracted from various natural products and/or components of natural products according to the intended use. Examples of the aerosol-source material include glycerine, propylene glycol, triacetin, 1,3-butanediol, and mixtures thereof.

The amount of the aerosol-source material in the shredded tobacco is typically, but not necessarily, 5 wt% or more, preferably 10 wt% or more, and typically 50 wt% or less, preferably 15 wt% or more and 25 wt% or less relative to the total weight of the tobacco material in order to generate a sufficient amount of aerosol and impart a good flavor.

The shredded tobacco may contain a flavoring agent. The type of flavoring agent is not limited. To impart a good flavor, the flavoring agent may be, for example, acetanisole, acetophenone, acetylpyrazine, 2-acetylthiazole, alfalfa extract, amyl alcohol, amyl butyrate, trans-anethole, star anise oil, apple juice, Peru balsam oil, beeswax absolute, benzaldehyde, benzoin resinoid, benzyl alcohol, benzyl benzoate, benzyl phenylacetate, benzyl propionate, 2,3-butanedione, 2-butanol, butyl butyrate, butyric acid, caramel, cardamom oil, carob absolute, β-carotene, carrot juice, L-carvone, β-caryophyllene, cassia bark oil, cedarwood oil, celery seed oil, chamomile oil, cinnamaldehyde, cinnamic acid, cinnamyl alcohol, cinnamyl cinnamate, citronella oil, DL-citronellol, clary sage extract, cocoa, coffee, cognac oil, coriander oil, cuminaldehyde, davana oil, δ-decalactone, γ-decalactone, decanoic acid, dill herb oil, 3,4-dimethyl-1,2-cyclopentanedione, 4,5-dimethyl-3-hydroxy-2,5-dihydrofuran-2-one, 3,7-dimethyl-6-octenoic acid, 2,3-dimethylpyrazine, 2,5-dimethylpyrazine, 2,6-dimethylpyrazine, ethyl 2-methylbutyrate, ethyl acetate, ethyl butyrate, ethyl hexanoate, ethyl isovalerate, ethyl lactate, ethyl laurate, ethyl levulinate, ethyl maltol, ethyl octanoate, ethyl oleate, ethyl palmitate, ethyl phenylacetate, ethyl propionate, ethyl stearate, ethyl valerate, ethyl vanillin, ethyl vanillin glucoside, 2-ethyl-3,(5 or 6)-dimethylpyrazine, 5-ethyl-3-hydroxy-4-methyl-2(5H)-furanone, 2-ethyl-3-methylpyrazine, eucalyptol, fenugreek absolute, genet absolute, gentian root infusion, geraniol, geranyl acetate, grape juice, guaiacol, guava extract, γ-heptalactone, γ-hexalactone, hexanoic acid, cis-3-hexen-1-ol, hexyl acetate, hexyl alcohol, hexyl phenylacetate, honey, 4-hydroxy-3-pentenoic acid lactone, 4-hydroxy-4-(3-hydroxy-1-butenyl)-3,5,5-trimethyl-2-cyclohexen-1-one, 4-(para-hydroxyphenyl)-2-butanone, sodium 4-hydroxyundecanoate, immortelle absolute, β-ionone, isoamyl acetate, isoamyl butyrate, isoamyl phenylacetate, isobutyl acetate, isobutyl phenylacetate, jasmine absolute, kola nut tincture, labdanum oil, terpeneless lemon oil, glycyrrhiza extract, linalool, linalyl acetate, lovage root oil, maltol, maple syrup, menthol, menthone, L-menthyl acetate, para-methoxybenzaldehyde, methyl-2-pyrrolyl ketone, methyl anthranilate, methyl phenylacetate, methyl salicylate, 4'-methylacetophenone, methylcyclopentenolone, 3-methylvaleric acid, mimosa absolute, molasses, myristic acid, nerol, nerolidol, γ-nonalactone, nutmeg oil, δ-octalactone, octanal, octanoic acid, orange flower oil, orange oil, orris root oil, palmitic acid, ω-pentadecalactone, peppermint oil, petitgrain paraguay oil, phenethyl alcohol, phenethyl phenylacetate, phenylacetic acid, piperonal, plum extract, propenyl guaethol, propyl acetate, 3-propylidene phthalide, prune juice, pyruvic acid, raisin extract, rose oil, rum, sage oil, sandalwood oil, spearmint oil, styrax absolute, marigold oil, tea distillate, α-terpineol, terpinyl acetate, 5,6,7,8-tetrahydroquinoxaline, 1,5,5,9-tetramethyl-13-oxacyclo(8.3.0.0(4.9))tridecane, 2,3,5,6-tetramethylpyrazine, thyme oil, tomato extract, 2-tridecanone, triethyl citrate, 4-(2,6,6-trimethyl-1-cyclohexenyl)2-buten-4-one, 2,6,6-trimethyl-2-cyclohexene-1,4-dione, 4-(2,6,6-trimethyl-1,3-cyclohexadienyl)2-buten-4-one, 2,3,5-trimethylpyrazine, γ-undecalactone, γ-valerolactone, vanilla extract, vanillin, veratraldehyde, violet leaf absolute, N-ethyl-p-menthane-3-carboxamide (WS-3), or ethyl-2-(p-menthane-3-carboxamide) acetate (WS-5). The flavoring agent is particularly preferably menthol. These flavoring agents may be used singly or in combination of two or more.

To impart a good flavor, the amount of the flavoring agent in the shredded tobacco is typically, but not necessarily, 10000 ppm or more, preferably 20000 ppm or more, more preferably 25000 ppm or more, and typically 70000 ppm or less, preferably 50000 ppm or less, more preferably 40000 ppm or less, still more preferably 33000 ppm or less relative to the total amount of the tobacco material.

To ensure the performance of the tobacco product and impart a good flavor, the packing density of shredded tobacco in the tobacco rod or other members into which the shredded tobacco is introduced is typically, but not necessarily, 250 mg/cm³ or more, preferably 300 mg/cm³ or more, and typically 400 mg/cm³ or less, preferably 350 mg/cm³ or less.

The tobacco rod may have any structure and can be formed by wrapping wrapping paper around the tobacco material so that the tobacco material comes inside. This can also apply when the tobacco sheet and the tobacco granules described above are used.

### [Tobacco Sheet]

The tobacco sheet is composed of a sheet-shaped tobacco material. The number of tobacco sheets introduced into a tobacco material-introduced member (hereinafter also referred to as a "tobacco rod or other members" in this section), such as a tobacco rod or other members, may be one, or two or more.

Examples of the form of the tobacco sheet composed of one sheet include a tobacco sheet (so-called gathered sheet) that has one side with a length similar to the length of the tobacco rod or other members in the longitudinal direction wherein the tobacco sheet fills the tobacco rod or other members while being folded multiple times in parallel to the longitudinal direction of the tobacco rod or other members. Examples further include a tobacco sheet that has one side with a length similar to the length of the tobacco rod or other members in the longitudinal direction wherein the tobacco sheet fills the tobacco rod or other members while being wound in a direction perpendicular to the longitudinal direction of the tobacco rod or other members.

Examples of the form of the tobacco sheet composed of two or more tobacco sheets include multiple tobacco sheets that each have one side with a length similar to the length of the tobacco rod or other members in the longitudinal direction wherein the tobacco sheets fill the tobacco rod or other members while being wound in a direction perpendicular to the longitudinal direction of the tobacco rod or other members such that the tobacco sheets are concentrically disposed.

The phrase "concentrically disposed" means that the tobacco sheets are disposed such that the centers of all the tobacco sheets are located at substantially the same position. The number of tobacco sheets is not limited but may be, for example, two, three, four, five, six, or seven.

Two or more tobacco sheets may all have the same composition or physical properties, or some or all of the tobacco sheets may have different compositions or physical properties. The tobacco sheets may have the same thickness or different thicknesses.

The tobacco sheet can be produced by preparing multiple tobacco sheets having different widths, laminating the tobacco sheets with each other such that the width decreases from the bottom to the top to form a laminate, and winding the laminate by inserting the laminate into a winding tube.

According to this production method, the multiple tobacco sheets extend in the longitudinal direction and are concentrically disposed around the longitudinal axis. A fitting portion extending in the longitudinal direction may be formed between the longitudinal axis and the innermost tobacco sheet.

In this production method, the laminate is preferably prepared such that a non-contact section is formed between adjacent ones of the tobacco sheets after winding. If a non-contact section (gap) where the tobacco sheets are not in contact with each other is present between the multiple tobacco sheets, a flavor flow path can be ensured to increase the delivery efficiency of flavor components. At the same time, the heat from the heater can be transferred to outer tobacco sheets through a contact section between the multiple tobacco sheets to improve the heat transfer efficiency.

To provide a non-contact section, where the tobacco sheets are not in contact with each other, between the multiple tobacco sheets, the laminate may be prepared by, for example, laminating embossed tobacco sheets with each other with the entire surfaces of adjacent tobacco sheets not bonded together, laminating embossed tobacco sheets with each other with adjacent tobacco sheets partially bonded together, or laminating embossed tobacco sheets with each other with the entire surfaces or part of adjacent tobacco sheets lightly bonded together such that the tobacco sheets are separated from each other after winding.

To prepare a tobacco rod or other members including wrapping paper, the wrapping paper may be disposed at the bottom of the laminate.

A fitting portion can also be formed by placing a cylindrical dummy, such as a mandrel, at the top of the laminate to form a tobacco sheet, and then removing the dummy.

To ensure the performance of the tobacco product and impart a good flavor, the packing density of the tobacco sheet in the tobacco rod or other members into which the tobacco sheet is introduced is typically, but not necessarily, 250 mg/cm³ or more, preferably 300 mg/cm³ or more, and typically 400 mg/cm³ or less, preferably 350 mg/cm³ or less.

The tobacco sheet may contain an aerosol-source material that generates aerosol smoke upon heating. An aerosol source, such as a polyol such as glycerine, propylene glycol, or 1,3-butanediol, is added as an aerosol-source material. The amount of the aerosol-source material added relative to the dry weight of the tobacco sheet is preferably 5 wt% or more and 50 wt% or less, more preferably 15 wt% or more and 25 wt% or less.

The tobacco sheet can be appropriately produced by a known method, such as a papermaking method, a slurry method, or a rolling method. The homogenized sheet described above in the section of shredded tobacco can also be used.

In the case of the papermaking method, the tobacco sheet can be produced by a method including the following steps. 1) Dry tobacco leaves are roughly ground and subjected to extraction with water to separate the water extract and the residue. 2) The water extract is concentrated by vacuum drying. 3) Pulp is added to the residue, and the obtained mixture is fiberized in a refiner, followed by a papermaking process. 4) The concentrated water extract is added to the sheet obtained by the papermaking process, and the sheet is dried to form a tobacco sheet. In this case, a step of removing some of components, such as nitrosamine, may be added (see Japanese Unexamined Patent Application Publication (Translation of PCT Application) No. 2004-510422).

In the case of the slurry method, the tobacco sheet can be produced by a method including the following steps. 1) Water, pulp, a binder, and ground tobacco leaves are mixed. 2) The mixture is thinly spread (cast) and dried. In this case, a step of removing some of components, such as nitrosamine, by irradiating the slurry of the mixture of water, pulp, the binder, and the ground tobacco leaves with ultraviolet rays or X-rays may be added.

Alternatively, a non-woven fabric tobacco sheet produced by a method including the following steps as described in International Publication No. WO 2014/104078 can also be used. 1) Granular tobacco leaves and a binding agent are mixed. 2) The mixture is sandwiched between sheets of non-woven fabric. 3) The resulting laminate is formed into a certain shape by heat fusing to obtain a non-woven fabric tobacco sheet.

The type of tobacco leaves used as a raw material in each of the methods described above may be the same as that described above in the section of shredded tobacco.

The tobacco sheet may have any composition, but for example, the amount of the tobacco raw material (tobacco leaves) relative to the total weight of the tobacco sheet is preferably 50 wt% or more and 95 wt% or less. The tobacco sheet may contain a binder. The binder may be one described above. Examples of the binder include guar gum, xanthan gum, CMC (carboxymethyl cellulose), and CMC-Na (carboxymethyl cellulose sodium salt). The binder content relative to the total weight of the tobacco sheet is preferably 1 wt% or more and 10 wt% or less. The tobacco sheet may further contain other additives. Examples of the additives include a filler, such as pulp. Multiple tobacco sheets are used in this embodiment. The tobacco sheets may all have the same composition or physical properties, or some or all of the tobacco sheets may have different compositions or physical properties.

The thickness of each tobacco sheet is preferably, but not necessarily, 150 µm or more and 1000 µm or less, more preferably 200 µm or more and 600 µm or less, from the viewpoint of the balance between heat transfer efficiency and strength. The tobacco sheets may have the same thickness or different thicknesses.

### [Tobacco Granules]

Examples of the raw materials of the tobacco granules include, but are not limited to, (a) a ground material made by grinding tobacco leaves or the tobacco material in another form, (b) moisture, (c) at least one pH adjuster selected from the group consisting of potassium carbonate and sodium hydrogen carbonate, and (d) at least one binder selected from the group consisting of pullulan and hydroxypropyl cellulose.

The ground material (component (a)) made by grinding tobacco leaves or the tobacco material in another form contained in the tobacco granules includes ground tobacco leaves, ground tobacco sheets, and other materials. The type of tobacco may be, for example, Burley tobacco, flue-cured tobacco, or oriental tobacco. The tobacco material is preferably ground to a size of 200 µm or more and 300 µm or less.

A mixture of the raw materials of the tobacco granules typically contains 20 wt% or more and 80 wt% or less of the ground tobacco material.

The moisture (component (b)) contained in the tobacco granules maintains the integrity of the tobacco granules.

The mixture of the raw materials of the tobacco granules typically contains 3 wt% or more and 13 wt% or less of moisture. The tobacco granules may also typically contain 5 wt% or more and 17 wt% or less of moisture in terms of loss on drying. The loss on drying refers to a change in weight before and after drying of a sample when a portion of the sample is collected for measurement and completely dried (e.g., dried at a constant temperature (105°C) for 15 minutes) by evaporating all moisture in the collected sample. Specifically, the loss on drying refers to the proportion (wt%) of the sum of the amount of moisture and the amount of volatile components, which volatilize under the above drying conditions, contained in the sample to the weight of the sample. In other words, the loss on drying (wt%) can be expressed by the following equation. Loss on drying (wt%) = {(weight of sample before complete drying) - (weight of sample after complete drying) × 100/weight of sample before complete drying

The pH adjuster (component (c)) contained in the tobacco granules is composed of potassium carbonate, sodium hydrogen carbonate, or a mixture thereof. The pH adjuster adjusts the pH of the tobacco granules to the alkaline side to promote the release of the flavor components, which are contained in the tobacco granules, from the tobacco granules, thus providing a flavor that may be satisfactory to users.

The mixture of the raw materials of the tobacco granules may typically contain 5 wt% or more and 20 wt% or less of the pH adjuster.

The binder (component (d)) contained in the tobacco granules binds tobacco granule components together to hold the integrity of the tobacco granules. The binder may be one described above and is composed of pullulan, hydroxypropyl cellulose (HPC), or a mixture thereof.

The mixture of the raw materials of the tobacco granules may typically contain 0.5 wt% or more and 15 wt% or less of the pH adjuster.

The tobacco granules may be composed of the components (a), (b), (c), and (d), but may further contain additional components.

Examples of the additional components include an aerosol-source material (component (e)). The aerosol-source material generates aerosol smoke. The aerosol-source material is composed of a polyhydric alcohol. Examples of the polyhydric alcohol may include glycerine, propylene glycol, sorbitol, xylitol, and erythritol. These polyhydric alcohols can be used singly or in combination of two or more.

The mixture of the raw materials of the tobacco granules may contain 5 wt% or more and 15 wt% or less of the aerosol-source material when the mixture contains the aerosol-source material.

Examples of the additional components further include (f) a flavor material (solid or liquid) other than flavor components. Examples of the flavor material include sugar (e.g., sucrose or fructose), cocoa powder, carob powder, coriander powder, licorice powder, orange peel powder, rose hip powder, chamomile flower powder, lemon verbena powder, peppermint powder, leaf powder, spearmint powder, black tea powder, and menthol. These flavor materials can be used singly or in combination of two or more.

The mixture of the raw materials of the tobacco granules may typically contain 0.5 wt% or more and 30 wt% or less of the flavor material. The flavor material may be added to the components (a), (b), (c), (d), and (e) by being directly kneaded with these components, or may be added to these components by accommodating the flavor material in a known inclusion host compound, such as cyclodextrin, to prepare an inclusion compound, and then kneading the inclusion compound with the components described above.

When the tobacco granules are composed of the components (a), (b), (c), (d), and (e), the mixture of the raw materials of the tobacco granules may typically contain about 33 wt% or more (and about 90 wt% or less) of the component (a).

The tobacco granules are prepared by mixing the components (a), (c), and (d) and as desired, the components (e) and (f), adding the component (b) to the resulting mixture and kneading them, granulating the resulting kneaded material in a wet extrusion granulator (into a long pillar shape), and then sizing the granules into a short pillar or spherical shape. The average particle size (D50) of the resulting tobacco granules is typically 0.2 mm or more and 1.2 mm or less, preferably 0.2 mm or more and 1.0 mm or less, more preferably 0.2 mm or more and 0.8 mm or less.

In extrusion granulation, the kneaded material is preferably extruded at a pressure of 2 kN or more at ambient temperature. In this extrusion at high pressure, the temperature of the kneaded material at the outlet of the extrusion granulator increases from ambient temperature to, for example, 90°C to 100°C instantaneously and readily, and 2 wt% or more and 4 wt% or less of moisture and volatile components evaporate. Therefore, the amount of water added to prepare the kneaded material may be larger than a desired amount of moisture in the tobacco granules by the amount of evaporating moisture.

The tobacco granules obtained by extrusion granulation may be dried as desired for moisture control. For example, if the loss on drying of the tobacco granules obtained by extrusion granulation is measured and found to be higher than a desired loss on drying (e.g., 5 wt% or more and 17 wt% or less), the tobacco granules may be further dried to obtain a desired loss on drying. The drying conditions (temperature and time) for obtaining a desired loss on drying can be set on the basis of predetermined drying conditions (temperature and time) required to reduce the loss on drying by a predetermined value.

The tobacco granules may consist of the tobacco granules described above, but may further contain an additional tobacco material. The additional tobacco material is typically composed of shreds or fine powder of tobacco leaves. The additional tobacco material can be used as a mixture with the tobacco granules.

When the tobacco material is used in a tobacco product, such as smokeless tobacco, the tobacco material is, for example, tobacco powder made by grinding tobacco leaves.

The tobacco powder may contain, for example, shreds, ultrafine powder, and fibers of lamina of dry tobacco leaves. In this description, tobacco leaves may include mesophyll (lamina), leaf veins (stem), roots, or other parts. The tobacco filling material may basically include elements derived from midribs and roots of tobacco leaves, in addition to tobacco powder made from lamina of tobacco leaves.

The tobacco powder may have any particle size. To provide good texture in the oral cavity to improve comfort during use and to enhance release of flavor components contained in the tobacco powder into the oral cavity, the tobacco powder preferably passes through a mesh of 1.2 mm, more preferably passes through a mesh of 1.0 mm.

Examples of tobacco species used as a raw material of tobacco powder include, but are not limited to, the genus Nicotiana, such as flue-cured tobacco, such as Nicotiana Tabacum, Burley tobacco, and Brasilia tobacco, such as Nicotiana rustica.

Since most of polymers (especially proteins and starch) contained in tobacco leaves usually have molecular weights over 10,000, sticking between pieces of the tobacco material decreases with increasing amounts of components having molecular weights less than or equal to this molecular weight. The amount of components having molecular weights less than or equal to 10,000 in the tobacco material is typically, but not necessarily, 10 wt% or more, preferably 20 wt% or more, more preferably 30 wt% or more, still more preferably 40 wt% or more, yet still more preferably 50 wt% or more, and typically 90 wt% or less, preferably 80 wt% or less, more preferably 60 wt% or less.

The molecular weight can be measured by electrophoresis or HPLC.

The more polymers (especially proteins and starch) contained in the extract obtained by tobacco material extraction, the lower the turbidity of the extract. The turbidity of the extract obtained by performing extraction using water as a solvent under conditions of a heating temperature of 80°C and a heating time of 30 minutes is preferably 200 NTU or less, more preferably 80 NTU or less, still more preferably 20 NTU or less, yet still more preferably 10 NTU or less, and although there is no need to set the upper limit, the turbidity is typically 2 NTU or more, and may be 5 NTU or more

The turbidity may be a value measured with a portable turbidity meter CT100 available from CEM Corporation.

### <Tobacco Material Production Method>

The tobacco material described above may be produced by any method and, for example, can be produce by a production method according to another embodiment of the present invention described below.

A method for producing a tobacco material according to another embodiment of the present invention (hereinafter also referred to simply as a "tobacco material production method") includes: an extraction step of performing extraction from raw material tobacco;
a filtration step of obtaining a filtrate by filtering an extract obtained in the extraction step; and
a processing step of bringing the filtrate into contact with a residue obtained in the extraction step and then forming the residue into a formed body, or forming a residue obtained in the extraction step into a formed body and then bringing the filtrate into contact with the formed body,
wherein a filtration membrane in the filtration step has an average pore size of 10,000 Da or less.

### [Extraction Step]

The tobacco material production method according to this embodiment includes the extraction step of obtaining an extract by extraction from raw material tobacco.

The extraction method is not limited and may be a known method. The extraction method may involve immersing raw material tobacco in a solvent and then performing heating to obtain an extract.

The type of solvent that can be used in the extraction is not limited as long as it can dissolve proteins (preferably proteins and starch). The solvent may be an organic solvent or inorganic solvent. Examples of the solvent include water, ethylene glycol, propylene glycol, and ethanol. The solvent is preferably water from the viewpoint of safety, cost, and availability.

The heating temperature in the extraction is not limited and may be, for example, 1°C or higher, preferably 5°C or higher, more preferably 20°C or higher, still more preferably 40°C or higher, and may be 95°C or lower, preferably 90°C or lower, more preferably 80°C or lower, still more preferably 70°C or lower.

The heating time in the extraction is not limited and may be, for example, 20 minutes or longer, preferably 30 minutes or longer, more preferably 1 hour or longer, still more preferably 1.5 hours or longer, and may be 3 hours or shorter, more preferably 2 hours or shorter.

### [Filtration Step]

The tobacco material production method according to this embodiment includes a filtration step of obtaining a filtrate by filtering an extract obtained in the extraction step.

To reduce the total protein (preferably total protein and total starch) content in the tobacco material to the range described above by the filtration process, it is necessary to perform filtration using a filtration membrane having a very small average pore size. Specifically, the average pore size of the filtration membrane is 10,000 Da or less. To further reduce the total protein (preferably total protein and total starch) content, the average pore size of the filtration membrane is preferably 5,000 Da or less, more preferably 2,000 Da or less, and although there is no need to set the lower limit, the average pore size of the filtration membrane may be 100 Da or more, or may be 500 Da or more.

The type of filtration process is not limited, and a common filtration process can be employed. To improve filtration efficiently, cross-flow filtration is preferably employed, and more preferably performed in combination with dialysis, such as electrodialysis.

The filtration method described above is not limited as long as it uses a filtration membrane having the average pore size as described above, and the filtration method may be a known method.

The material of the filtration membrane is typically, but not necessarily, for example, polyester, polypropylene, polysulfone, hydrophilic polysulfone, polyethersulfone, or fluororesin.

To prevent clogging and improve filtration efficiency, the thickness of the filtration membrane is typically, but not necessarily, 0.5 µm or more, preferably 1.0 µm or more, more preferably 1.5 µm or more, still more preferably 2.0 µm or more, yet still more preferably 2.5 µm or more, and the upper limit may be, for example, 1 mm or less.

To prevent clogging and improve filtration efficiency, the temperature of the extract in the filtration is typically, but not necessarily, 15°C or higher, preferably 20°C or higher, more preferably 30°C or higher, still more preferably 45°C or higher, typically 95°C or lower, preferably 90°C or lower, more preferably 80°C or lower, still more preferably 70°C or lower.

If filtration using the filtration membrane as described above is not performed, an extract that is turbid due to suspended solids is obtained after solid-liquid separation. The suspended solids are insoluble substances having particle sizes of 2 mm or less and are a group of colloidal components including raw material tobacco fine powder, proteins, and starch. If centrifugal thin-film concentration or other process is performed as a concentration process other than the filtration described above, the suspended solids may cause, for example, burning at a liquid contact heater in a concentrator during concentration by heating and may increase the viscosity of the extract. A main protein contained in raw material tobacco is RuBisCo (ribulose-1,5-bisphosphate carboxylase), which is one of oxygens involved in metabolism. RuBisCo is mainly biosynthesized during the tobacco leaf unfolding process. RuBisCo reaches the maximum amount, which is about 60% of the total protein contained in the tobacco leaf extract, after 15 days of growth, and is present in an amount of about 20% of the total protein thereafter. RuBisCo is a 16-mer composed of eight large subunits having a molecular weight of about 53,000 and eight small subunits having a molecular weight of about 12,000. RuBisCo is eluted from tobacco leaves into an extract and contributes to increasing the viscosity during concentration and drying. Starch is generally said to have a molecular weight of 50,000 to 360,000 and is one of main viscous components in the extract.

The filtrate subjected to filtration may have any total protein content. To prevent or reduce sticking between pieces of the final tobacco material, the total protein content in the extract after filtration when the tobacco protein content in the extract before filtration is 100 wt% is typically 80 wt% or less, preferably 70 wt% or less, more preferably 50 wt% or less, still more preferably 10 wt% or less, and although there is no need to set the lower limit, the total protein content in the extract after filtration is typically 0.5 wt% or more, or may be 5 wt% or more, or may be 8 wt% or more.

The total protein content can be evaluated by the following method. First, 20 µL of each of a BSA standard solution, an extract before filtration, and an extract after filtration is dispensed, and 1 ml of Bradford Dye Reagent is added and mixed to cause a reaction at a room temperature of 25°C for 5 minutes. Subsequently, the total protein content before filtration and after filtration in each solution after the reaction is measured at an absorbance of 595 nm (absorbance associated with BSA protein).

The filtrate subjected to filtration may have any total starch content. To prevent or reduce sticking between pieces of the final tobacco material, the total starch content in the extract after filtration when the tobacco starch content in the extract before filtration is 100 wt% is typically 80 wt% or less, preferably 70 wt% or less, more preferably 60 wt% or less, still more preferably 50 wt% or less, and although there is no need to set the lower limit, the total starch content in the extract after filtration is typically 15 wt% or more, or may be 30 wt% or more, or may be 50 wt% or more.

The total starch content can be evaluated by the same method as the method for evaluating the total starch content using F-kit Starch available from J.K. International Inc., as described above.

As described above, the more polymers (especially proteins and starch) contained in the extract, the lower the turbidity of the extract. The turbidity reduction rate of the filtrate (turbidity of extract before filtration - turbidity of extract after filtration) × 100/turbidity of extract before filtration) when the turbidity of the extract before filtration is 1 is preferably 50% or more, more preferably 70% or more, still more preferably 80% or more, yet still more preferably 90% or more, and may be 100% or less. There is no need to set the upper limit of the turbidity of the extract after filtration, but the turbidity reduction rate is typically 40% or less, may be 30% or less, or may be 20% or less. The turbidity reduction rate can be regarded as the removal rate of suspended matter in the extract.

The turbidity can be measured by the same method as the method for measuring the turbidity of the extract from the tobacco material described above.

### [Processing Step]

The tobacco material production method according to this embodiment includes a processing step of bringing the filtrate into contact with a residue obtained in the extraction step and then forming the residue into a formed body, or forming a residue obtained in the extraction step into a formed body and then bringing the filtrate into contact with the formed body.

The method for bringing the filtrate into contact with the residue is not limited and may involve, for example, immersing the residue in the filtrate, or spraying the filtrate to the residue.

The method for forming the residue into the formed body is not limited and may be a known method. For example, the residue can be formed into a shape, such as the shredded tobacco, the tobacco sheet, or the tobacco granules described above. The method for bringing the formed body into contact with the filtrate is not limited and may involve, for example, immersing the formed body in the filtrate, or spraying the filtrate to the formed body.

The filtrate obtained by the filtration described above more easily permeates the residue than the extract without filtration. This is because filtration reduces proteins (especially proteins and starch) having viscosity.

The dry matter permeation rate expressed by ((weight of tobacco material after permeation and drying - weight of residue/formed body before permeation) × 100/weight of raw material tobacco) is preferably 60% or more, more preferably 75% or more, still more preferably 80% or more, yet still more preferably 90% or more, and although there is no need to set the upper limit, the dry matter permeation rate is typically 100% or less.

The tobacco material production method according to this embodiment may include a step other than the extraction step, the filtration step, and the processing step. In another embodiment, the filtration step may be replaced by a step of removing suspended solids by precipitation upon cooling or a step of adsorption of polymers.

### <Applications of Tobacco Material>

The tobacco material described above can be used in any application and can be used in various tobacco products. A tobacco product according to another embodiment of the present invention is a tobacco product having the tobacco material described above. Specific examples of the tobacco product include cigarettes, non-combustion-heating-type tobacco, electronic cigarettes, and smokeless tobacco. Non-combustion-heating-type tobacco and electronic cigarettes are so-called cartridges and accommodated in non-combustion-heating-type tobacco products and electronic cigarette products, respectively.

The tobacco material may be used in any manner in cigarettes, non-combustion-heating-type tobacco, or electronic cigarettes. The tobacco material may be used in place of tobacco materials used in these tobacco products. For example, in such tobacco products including a tobacco rod member or other members into which the tobacco material is introduced, the tobacco material can be introduced into and used in the member. In this case, the tobacco product may be expressed as a cigarette, non-combustion-heating-type tobacco, or an electronic cigarette that includes at least a tobacco material-introduced member, such as a tobacco rod member or other members, wherein the tobacco material-introduced member has the tobacco material described above. When the tobacco product includes not only the tobacco rod member but also a filter member and a member to which an aerosol-source material mainly in the form of liquid is introduced, the tobacco material described above may be introduced into these members by addition of the tobacco material to the members or other means. A non-combustion-heating-type tobacco product according to another embodiment of the present invention is an electric heating tobacco product that includes: an electric heating device that includes a heater member, a battery unit that serves as an electric power source of the heater member, and a control unit for controlling the heater member; and the above non-combustion-heating-type tobacco to be inserted into the heater member so as to come into contact with the heater member.

The tobacco material may be used in any manner in smokeless tobacco. The tobacco material may be used in place of tobacco materials used in smokeless tobacco, such as chewing tobacco, snuff, or oral pouch products including tobacco materials enclosed in pouches. Such smokeless tobacco is placed between the lip and gum in the oral cavity to enjoy its taste and flavor. For example, in the case of oral pouch products, specifically, an oral pouch product including an oral composition containing a tobacco material and a pouch that encloses the oral composition and that is made of non-woven fabric or other materials, the tobacco material can be introduced into and used in the member. In this case, the tobacco product may be expressed as an oral pouch product including at least an oral composition containing a tobacco material and a pouch enclosing the oral composition, wherein the tobacco material is the tobacco material described above.

The conditions such as the properties and amount of the tobacco product used in each of the tobacco products described above can be appropriately set in a range of conditions in known tobacco products.

### EXAMPLES

The present invention will be described below in more detail by way of Examples. The present invention is not construed as being limited to Examples described below.

### <Extract>

Shredded tobacco made from tobacco leaves, which were raw material tobacco, and water, which was an extraction solvent, were mixed at 65°C for 20 minutes or longer, and the obtained mixture was subjected to solid-liquid separation in extraction to obtain an extract A. The extract A was then subjected to cross-flow filtration using a 100-kDa filtration membrane to obtain an extract B (filtrate). The extract A was subjected to cross-flow filtration using a 10-kDa filtration membrane to obtain an extract C (filtrate). Ultrafiltration using the cross-flow filtration as described above was carried out under the following conditions.

Cross-flow filtration equipment: Lab Unit M10 available from Alfa Laval
- Average pore size of filtration membrane (filter): 100 kDa (indicating the filtration ability is 100 kDa), 10 kDa
- Thickness of filtration membrane: 0.1 µm
- Membrane surface velocity relative to average pore size of filtration membrane: 0.9 mL/min·cm²
- Temperature of extract being supplied: 45°C

### [Turbidity of Extract of Raw Material Tobacco]

The turbidity of each extract described above was measured by using a spectrophotometer (SP300 available from Takara Bio Inc.) under the condition of a wavelength of 660 nm. The turbidity reduction rate of the extracts B and C was calculated when the turbidity of the extract A was 1. The extract B exhibited a turbidity reduction rate of 90% or more, and the extract C exhibited a turbidity reduction rate of 95% or more. This result indicates that the total protein in the extract A remained almost unchanged in filtration using the 100-kDa filtration membrane, but 95% or more of the suspended solids in the extract A were removed by filtration using the 10-kDa filtration membrane.

### [Total Protein Content in Extract From Raw Material Tobacco]

In BCA Protein Assay Kit (available from Takara), 20 µL of each of a BSA standard solution and the extracts A to C was dispensed, and 1 ml of Bradford Dye Reagent was added and mixed to cause a reaction at a room temperature of 25°C for 5 minutes. The total protein content of each solution after the reaction was evaluated at an absorbance of 595 nm (absorbance for BSA protein). The results reveal that the total protein in the extract A remained almost unchanged in filtration using the 100-kDa filtration membrane, but 80 wt% or more of the total protein in the extract A was removed by filtration using the 10-kDa filtration membrane.

### [Total Starch Content in Extract From Raw Material Tobacco]

The starch content was evaluated by using F-kit Starch (available from J.K. International Inc). The results reveal that, in filtration using the 100-kDa filtration membrane, the total protein in the extract A remained almost unchanged but 30% or more of the total starch was removed. The results also indicate that more starch can be removed by filtration using the 10-kDa filtration membrane, which has a smaller average pore size than the 100-kDa filtration membrane, that is, limits substances that can pass therethrough.

### [Viscosity of Extract From Raw Material Tobacco]

The viscosity of each of the extracts A to C was evaluated at 20°C by using SU-10 available from AND Japan. As a result, the extracts A to C each had a viscosity of 1.24 mPa·s.

### <Tobacco Material>

The residues obtained by the extraction process described above were subjected to a papermaking process to obtain sheet-shaped formed bodies each having a thickness of 0.5 mm and an area of 25 cm² (5 cm × 5 cm). Subsequently, the tobacco sheets were immersed in the extracts A to C for 10 minutes and then dried at 80°C for 2 hours to obtain sheet-shaped tobacco materials A to C. The amount of raw material tobacco per 100 mg tobacco material in terms of dry weight was calculated from the amount of supplied raw material tobacco. The amount of raw material tobacco was 53 mg in the tobacco material A, 62 mg in the tobacco material B, and 87 mg in the tobacco material C.

### [Dry Matter Permeation Rate]

The dry matter permeation rate was calculated from the formula (weight of tobacco material after permeation and drying - weight of formed body before permeation) × 100/weight of raw material tobacco). As a result, the extract A exhibited a dry matter permeation rate of about 50%, the extract B also exhibited a dry matter permeation rate similar to that of the extract A, and the extract C exhibited a dry matter permeation rate of 85 wt% or more.

### [Total Protein Content in Tobacco Material]

The proteins in the tobacco materials A to C were evaluated by the following method. First, 100 mg of the tobacco material to be measured was collected evenly at 10 positions of the entire tobacco material, and 100 mg of distilled water was added, which was then subjected to extraction at 80°C for 1 hour. The average protein content was calculated and evaluated. The total protein content in the tobacco material was measured by the method for measuring the total protein content mentioned in the description of the tobacco material. As a result, the total protein content per 100 mg dry weight was 6 mg in the tobacco material A (corresponding to a total protein content of 6 wt% in the tobacco material), 6 mg in the tobacco material B (corresponding to a total protein content of 6 wt% in the tobacco material), and 2 mg in the tobacco material C (corresponding to a total protein content of 2 wt% in the tobacco material).

### [Starch Content in Tobacco Material]

The total starch in each of the tobacco materials A and B was evaluated by the following method. First, 100 mg of each tobacco material to be measured was collected evenly at 10 positions of the entire tobacco material, and 100 mg of distilled water was added, which was then subjected to extraction at 80°C for 1 hour. The average value of the starch content in the obtained liquids was calculated and evaluated. The total starch content in the tobacco material was evaluated by the method for evaluating the total starch content mentioned in the description of the tobacco material. As a result, the total starch content per 100 mg tobacco material in terms of dry weight was 3.0 mg in the tobacco material A (corresponding to a total starch content of 3.0 wt% in the tobacco material), and 1.8 mg in the tobacco material B (corresponding to a total protein content of 1.8 wt% in the tobacco material). Since more starch can be removed by filtration using a 10-kDa filtration membrane, which has a smaller average pore size than a 100-kDa filtration membrane, that is, limits substances that can pass therethrough, the total starch content per 100 mg tobacco material in terms of dry weight in the case of using the tobacco material C can be presumed to be less than 1.8 mg (corresponding to a total starch content of 1.8 wt% in the tobacco material).

Therefore, it is found that the sum of the total protein content and the total starch content in each tobacco material, that is, the total protein and starch content per 100 mg tobacco material in terms of dry weight, is 9 mg in the tobacco material A (corresponding to a polymer content of 9 wt% in the tobacco material), and 7.8 mg in the tobacco material B (corresponding to a polymer content of 7.8 wt% in the tobacco material). In addition, the total protein and starch content per 100 mg in terms of tobacco material dry weight can be presumed to be less than 3.8 mg in the tobacco material C (corresponding to a polymer content of 3.8 wt% in the tobacco material).

### [Turbidity of Extract From Tobacco Material]

The tobacco materials A to C were subjected to extraction using water as a solvent under the conditions of a heating temperature of 80°C and a heating time of 30 minutes to obtain extracts A' to C'. The turbidity of each of the extracts A' to C' was measured by using a turbidity meter (portable turbidity meter CT100 available from CEM Corporation) under the condition of a wavelength of 810 nm. As a result, the turbidity of the extract A' was 224 NTU, the turbidity of the extract B' was 19 NTU, and the turbidity of the extract C' was 5 NTU.

### [Flavor Components in Tobacco Material]

The extracts A' to C' were subjected to GC-MS (available from Agilent) and compared in terms of the distribution of components having different molecular weights in the liquid. The results indicate that at least 80 wt% of flavor components remain in the liquid in the extract C' regardless of the total protein concentration and the total starch concentration. In other words, it is found that the filtration described above has no significant effect on the flavor.

### [Bonding Strength]

The residue obtained by the extraction process described above was subjected to a papermaking process to obtain two sheet-shaped formed bodies each having a thickness of 0.5 mm and an area of 25 cm² (1 cm × 8 cm). Subsequently, the two sheet-shaped formed bodies were placed on top of each other, immersed in this state in the extracts A to C, and then dried at 80°C for 2 hours to obtain bonded bodies A to C each composed of two sheet-shaped tobacco materials bonded together.

The peel strength for each of the bonded bodies was measured by using a tensile testing machine (Strograph E-S available from Toyo Seiki Seisaku-sho, Ltd.), and the strength when 50 mm peeling occurred was evaluated. The results reveal that the strength was 0.43 N for the bonded body A, 0.45 N for the bonded body B, and 0.09 N for the bonded body C, and the bonding strength significantly decreases with decreasing total protein (preferably total protein and total starch) content due to filtration using the 10-kDa filtration membrane.

## Claims

1. A tobacco material comprising a total protein content of 5 mg or less per 100 mg dry weight.

2. The tobacco material according to claim 1, wherein the tobacco material comprises a total protein content of 3 mg or less per 100 mg dry weight.

3. The tobacco material according to claim 2, wherein the tobacco material comprises a total protein content of less than 2 mg per 100 mg dry weight.

4. The tobacco material according to any one of claims 1 to 3, wherein the tobacco material comprises a total starch content of less than 1.8 mg per 100 mg dry weight.

5. The tobacco material according to any one of claims 1 to 4, wherein the tobacco material comprises a total protein and starch content of 7 mg or less per 100 mg dry weight.

6. A tobacco material comprising a total protein content of 5 wt% or less on a dry weight basis.

7. The tobacco material according to claim 6, wherein the tobacco material comprises a total starch content of less than 1.8 wt% on a dry weight basis.

8. The tobacco material according to claim 6 or 7, wherein the tobacco material comprises a total protein and starch content of 7 wt% or less in terms of dry weight.

9. The tobacco material according to any one of claims 6 to 8, wherein the tobacco material comprises a total protein content of 3 wt% or less on a dry weight basis.

10. The tobacco material according to any one of claims 1 to 9, wherein the tobacco material comprises 20 wt% or more of components having molecular weights of 10,000 or less.

11. The tobacco material according to claim 10, wherein the tobacco material comprises 30 wt% or more of the components having molecular weights of 10,000 or less.

12. The tobacco material according to claim 11, wherein the tobacco material comprises 40 wt% or more of the components having molecular weights of 10,000 or less.

13. The tobacco material according to any one of claims 1 to 12, wherein the tobacco material comprises a raw material tobacco content of 6 mg or more per 100 mg dry weight.

14. The tobacco material according to any one of claims 1 to 13, wherein an extract obtained by extraction from the tobacco material using water as a solvent under conditions of a heating temperature of 80°C and a heating time of 30 minutes has a turbidity of 80 NTU or less.

15. A tobacco product comprising the tobacco material according to any one of Claims 1 to 14.

16. The tobacco product according to claim 15, wherein the tobacco product is a cigarette, non-combustion-heating-type tobacco, an electronic cigarette, or smokeless tobacco.

17. A tobacco material production method comprising:
an extraction step of performing extraction from raw material tobacco;
a filtration step of obtaining a filtrate by filtering an extract obtained in the extraction step; and
a processing step of bringing the filtrate into contact with a residue obtained in the extraction step and then forming the residue into a formed body, or forming a residue obtained in the extraction step into a formed body and then bringing the filtrate into contact with the formed body,
wherein a filtration membrane in the filtration step has an average pore size of 10,000 Da or less.
